# EUROPEAN PATENT APPLICATION

(11) **EP 4 541 647 A1**
(43) Date of publication of application: **23.04.2025**
(21) Application number: 23887545.4
(22) Date of filing: 02.08.2023
(51) Int. Cl.: B60L 58/26, B60K 11/02, H01M 10/613, H01M 10/625, H01M 10/6556, H01M 10/6568, H01M 10/6569, H01M 10/66, H05K 7/20

(54) **THERMAL MANAGEMENT SYSTEM AND VEHICLE**

(30) Priority: 11.11.2022 CN 202211413269
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: XING, Xiaodong, Ningbo, Zhejiang 315899 (CN); XIA, Songyong, Ningbo, Zhejiang 315899 (CN); SUN, Ligang, Ningbo, Zhejiang 315899 (CN); LIU, Yabin, Ningbo, Zhejiang 315899 (CN); ZHENG, Xingliang, Ningbo, Zhejiang 315899 (CN)
(74) Representative: Range, Christopher William
(86) International application number: PCT/CN2023/110832
(87) International publication number: WO 2024/098849

(57) **Abstract**

Provided are a thermal management system (100) and a vehicle. The thermal management system (100) includes a battery temperature control loop (10) provided with a chiller heat exchanger (101) and an armature temperature control loop (20) provided with a condenser (201) and a radiator (202). The condenser (201) is able to exchange heat with the chiller heat exchanger (101). The armature temperature control loop (20) is connected in parallel with a bypass pipeline (203). The condenser (201) and the radiator (202) are located at one side of the bypass pipeline (203). The bypass pipeline (203) is provided with a switch element (204) for opening or closing the bypass pipeline (203).

## Description

### CROSS-REFERENCE TO RELATED APPLICATION

This application is based on and claims priority to Chinese Patent Application No. 202211413269.3, filed on November 11, 2022, the entire contents of which are incorporated herein by reference.

### FIELD

The present disclosure relates to the field of thermal management technologies, and more particularly, to a thermal management system and a vehicle.

### BACKGROUND

A thermal management system solution for a current water-cooled condenser is limited by a system flow rate. It is impossible to improve a heat dissipation quantity for a battery by increasing the system flow rate. Alternatively, it is necessary to develop a high-pressure-resistant waterway circulation system and a high-lift water pump with enormous costs.

At present, in order to reduce a charging waiting time for new energy vehicle users, a power battery capable of super-fast charging has been developed, which can be fully charged for just 15 minutes to 10 minutes. However, under super-fast charging conditions, a water-cooled condenser with highest performance and a water pump with highest performance currently available on the market are no longer sufficient to satisfy heat dissipation requirements for the power battery.

### SUMMARY

The present disclosure aims to solve at least one of the technical problems existing in the related art. To this end, an object of the present disclosure is to provide a thermal management system, which can reduce flow resistance of a system loop, bring a relatively large flow rate to the system loop, and satisfy heat dissipation requirements for the system.

The present disclosure further aims to provide a vehicle to apply the thermal management system as described above.

The thermal management system according to an embodiment of the present disclosure includes a battery temperature control loop provided with a chiller heat exchanger and an armature temperature control loop provided with a condenser and a radiator. The condenser is able to exchange heat with the chiller heat exchanger. The armature temperature control loop is connected in parallel with a bypass pipeline. The condenser and the radiator are located at one side of the bypass pipeline. The bypass pipeline is provided with a switch element for opening or closing the bypass pipeline.

With the thermal management system according to the embodiment of the present disclosure, by providing the bypass pipeline connected in parallel to the armature temperature control loop, the flow resistance of the system loop may be reduced. In addition, a relatively large flow rate may be brought to the system loop when the vehicle is in a super-fast charging mode, to satisfy the heat dissipation requirements for the system. Therefore, the entire system has a simple structure and relatively low use costs.

In some embodiments, the switch element has a first port, a second port, and a third port. Each of the first port and the third port is in communication with the armature temperature control loop, and the second port is in communication with the bypass pipeline.

In some embodiments, the switch element is a proportional control valve.

In some embodiments, the armature temperature control loop is provided with an armature control member, a drive motor, and a first pump. The switch element is disposed between the drive motor and the first pump, and the first pump and the radiator are located at one side of the bypass pipeline.

In some embodiments, the thermal management system further includes a first four-way valve and a second four-way valve. The first four-way valve is located between the armature control member and the condenser, and has two valve ports in communication with the armature temperature control loop and other two valve ports in communication with the battery temperature control loop. The second four-way valve is located between the radiator and the condenser, and has two valve ports in communication with the armature temperature control loop and other two valve ports in communication with the battery temperature control loop. The battery temperature control loop is provided with a power battery disposed between the first four-way valve and the second four-way valve.

In some embodiments, the battery temperature control loop is provided with a second pump disposed between the power battery and the second four-way valve.

In some embodiments, the armature temperature control loop is provided with a warm air pump disposed between the condenser and the second four-way valve.

In some embodiments, the armature temperature control loop is connected in parallel with a warm air core. The warm air core has an end located between the warm air pump and the second four-way valve and another end located between the condenser and the first four-way valve.

In some embodiments, the bypass pipeline has an end close to the condenser and another end close to the radiator.

A vehicle according to an embodiment of the present disclosure includes the thermal management system as described above.

With the vehicle according to the embodiment of the present disclosure, by providing the thermal management system, it is possible to reduce flow resistance in a circulation loop, increase a flow rate of a cooling fluid, and satisfy high heat dissipation requirements for the vehicle in a fast charging mode and a super-fast charging mode.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become apparent and readily understood from the following description of embodiments in conjunction with the accompanying drawings, in which:
FIG. 1 is a first schematic structural view of a thermal management system according to an embodiment of the present disclosure.
FIG. 2 is a second schematic structural view of a thermal management system according to an embodiment of the present disclosure.

Reference numerals:
100, thermal management system; 10, battery temperature control loop; 101, chiller heat exchanger; 102, power battery; 103, second pump; 20, armature temperature control loop; 201, condenser; 202, radiator; 203, bypass pipeline; 204, switch element; 2041, first port; 2042, second port; 2043, third port; 205, armature control member; 206, drive motor; 207, first pump; 208, warm air pump; 209, warm air core; 30, first four-way valve; 40, second four-way valve.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

In the description of the present disclosure, it needs to be understood that, orientation or position relationship indicated by terms such as "center", "longitudinal", "lateral", "length", "width", "thickness", "over", "below", "front", "back", "left", "right", "vertical", "horizontal", "top", "bottom", "in", and "out" is based on the orientation or position relationship illustrated in the accompanying drawings, and is merely for the convenience of describing the present disclosure and simplifying the description, rather than indicating or implying that the associated device or element must have a specific orientation, or be constructed and operated in a specific orientation, and therefore cannot be understood as a limitation on the present disclosure. In addition, the features associated with "first" and "second" may explicitly or implicitly include at least one of the features, which are used for distinguishing and describing the features without implying any order or priority.

In the description of the present disclosure, unless otherwise specifically defined, "plurality" means at least two.

In the description of the present disclosure, it needs to be noted that, unless specified and defined otherwise explicitly, the terms "mounted", "coupled", and "connected" should be interpreted in a broad sense. For example, it may be a fixed connection or a detachable connection or connection as one piece; mechanical connection or electrical connection; direct connection or indirect connection through an intermediate; or internal communication of two components. For those skilled in the art, the specific meaning of the above-mentioned terms in the present disclosure can be understood according to specific circumstances.

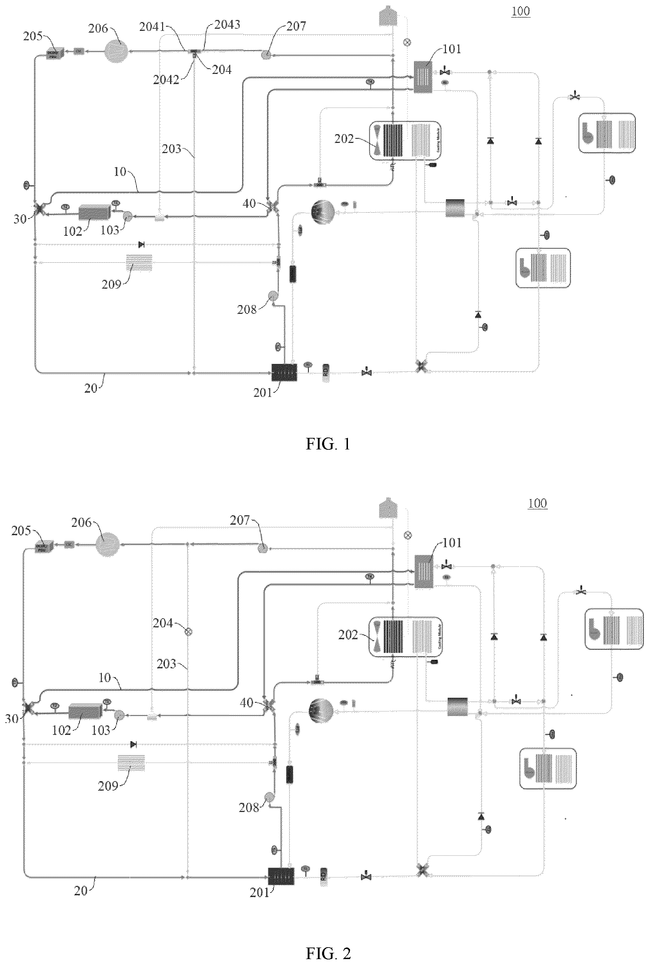

A thermal management system 100 according to the embodiments of the present disclosure is described below with reference to FIG. 1 and FIG. 2.

As illustrated in FIG. 1, a thermal management system 100 according to the embodiments of the present disclosure includes a battery temperature control loop 10 and an armature temperature control loop 20.

The battery temperature control loop 10 is provided with a chiller heat exchanger 101. The armature temperature control loop 20 is provided with a condenser 201 and a radiator 202. The condenser 201 is able to exchange heat with the chiller heat exchanger 101. The armature temperature control loop 20 is connected in parallel with a bypass pipeline 203. The condenser 201 and the radiator 202 are located at one side of the bypass pipeline 203, and the bypass pipeline 203 is provided with a switch element 204 for opening or closing the bypass pipeline 203.

It can be understood that the thermal management system 100 of the present disclosure may realize two modes of thermal management.

A first mode is described below. A vehicle is in a driving state, and a motor and a battery need to heat dissipation simultaneously. At this time, the switch element 204 is in a closed state, and the bypass pipeline 203 remains closed. The battery temperature control loop 10 dissipates heat from the battery through the chiller heat exchanger 101, and the armature temperature control loop 20 dissipates heat from the motor through the condenser 201 and the radiator 202.

A second mode is described below. The vehicle is in a super-fast charging mode, the motor has no high heat dissipation requirements, and the battery has relatively high heat dissipation requirements. At this time, the switch element 204 is opened, and the bypass pipeline 203 is kept on. A short loop with a shorter route is formed by the bypass pipeline 203, the condenser 201, and the radiator 202. This short loop has low flow resistance, which can satisfy large flow rate requirements. The condenser 201 may accelerate heat exchange with the chiller heat exchanger 101 to improve heat exchange efficiency of the battery temperature control loop 10 to the battery.

It should be noted that the condenser 201 and the chiller heat exchanger 101 may be understood as heat exchangers in an air conditioning system of the vehicle to realize a temperature adjustment inside the vehicle. The air conditioning system may further include components such as a compressor, and other configurations and operations of the air conditioning system are known to those skilled in the art, and details are omitted herein.

The condenser 201 may refer to a water-cooled condenser or condensers in other forms, which is not limited herein.

With the thermal management system 100 according to the embodiments of the present disclosure, by providing the bypass pipeline 203 connected in parallel to the armature temperature control loop 20, flow resistance of a system loop may be reduced. In addition, a relatively large flow rate may be brought to the system loop when the vehicle is in the super-fast charging mode, to satisfy heat dissipation requirements for the system. Therefore, the entire system has a simple structure and relatively low use costs.

In some embodiments, as illustrated in FIG. 1, the switch element 204 has a first port 2041, a second port 2042, and a third port 2043. Each of the first port 2041 and the third port 2043 is in communication with the armature temperature control loop 20, and the second port 2042 is in communication with the bypass pipeline 203. That is, when the second port 2042 is in communication with the third port 2043 and the first port 2041 is disconnected from the third port 2043, the thermal management system 100 may operate in the second mode. In addition, a third mode may also be realized through the first port 2041, the second port 2042, and the third port 2043 of the switch element 204.

In the third mode, the vehicle is in a fast charging mode, and the motor has no high heat dissipation requirements, but heat dissipation still needs to be performed on an armature control member 205 of the motor. The armature control member 205 may refer to a DCDC accessory. When the second port 2042 is in communication with the third port 2043 and the first port 2041 is in communication with the third port 2043, the armature temperature control loop 20 both may dissipate heat from the armature control member 205 and allow the condenser 201 to accelerate its heat exchange with the chiller heat exchanger 101 through the short loop formed by the bypass pipeline 203, the condenser 201, and the radiator 202, to dissipate heat from the battery, satisfying high heat dissipation requirements for the battery in the fast charging mode.

In some embodiments, the switch element 204 is a proportional control valve. The proportional control valve may adjust a flow rate between the second port 2042 and the third port 2043 in the third mode, and a flow rate between the first port 2041 and the third port 2043 may be adjusted proportionally. For example, since heat dissipation requirements for a control component are relatively small, and heat dissipation requirements for the battery are relatively large, the flow rate between the first port 2041 and the third port 2043 may be adjusted to a small flow rate, and the flow rate between the second port 2042 and the third port 2043 may be adjusted to a large flow rate, thereby realizing an increase in the flow rate and satisfying a greater requirement for fast charging.

In some embodiments, as illustrated in FIG. 2, the switch element 204 is a switch valve disposed on the bypass pipeline 203, i.e., the bypass pipeline 203 may be in direct communication with the armature temperature control loop 20. The switch element 204 is used only for controlling opening or closing of the bypass pipeline 203, which only requires satisfaction of the first mode and the second mode.

In some embodiments, the switch element 204 may be a stop valve or an SOV valve.

In some embodiments, as illustrated in FIG. 1 and FIG. 2, the armature temperature control loop 20 is provided with an armature control member 205, a drive motor 206, and a first pump 207. The switch element 204 is disposed between the drive motor 206 and the first pump 207. The first pump 207 and the radiator 202 are located at one side of the bypass pipeline 203. The first pump 207 is located in the short loop formed by the bypass pipeline 203, the condenser 201, and the radiator 202, and may drive a cooling fluid to flow in the loop during operation of the short loop.

In some embodiments, when the cooling fluid in the short loop is water, the first pump 207 may refer to a water pump. Since the bypass pipeline 203 may shorten a route of the short loop and reduce the flow resistance, on this basis, flow rate requirements under a higher heat dissipation quantity within a shorter charging time may be satisfied by adjusting power of the water pump.

In some embodiments, as illustrated in FIG. 1 and FIG. 2, the thermal management system 100 further includes a first four-way valve 30 and a second four-way valve 40. The first four-way valve 30 is located between the armature control member 205 and the condenser 201, and has two valve ports in communication with the armature temperature control loop 20 and other two valve ports in communication with the battery temperature control loop 10. The second four-way valve 40 is located between the radiator 202 and the condenser 201, and has two valve ports in communication with the armature temperature control loop 20 and other two valve ports in communication with the battery temperature control loop 10. The battery temperature control loop 10 is provided with a power battery 102, and the power battery 102 is disposed between the first four-way valve 30 and the second four-way valve 40.

The thermal management system 100 both may cool the power battery 102 and the drive motor 206 and play a role in heating the power battery 102 and the drive motor 206. By the first four-way valve 30 and the second four-way valve 40, flow paths of cooling fluid in the battery temperature control loop 10 and the armature temperature control loop 20 may be adjusted, improving an energy efficiency ratio.

For example, the battery temperature control loop 10 is in communication with the armature temperature control loop 20 through the first four-way valve 30 and the second four-way valve 40, which may allow a closed first preheating loop to be formed by the power battery 102, the first four-way valve 30, the condenser 201, and the second four-way valve 40, to heat the power battery 102.

The battery temperature control loop 10 is in communication with the armature temperature control loop 20 through the first four-way valve 30 and the second four-way valve 40 allow, which may allow a closed second preheating loop to be formed by the drive motor 206, the armature control member 205, the first four-way valve 30, the chiller heat exchanger 101, the second four-way valve 40, and the radiator 202, to heat the drive motor 206.

In some embodiments, as illustrated in FIG. 1 and FIG. 2, the armature temperature control loop 20 is provided with a warm air pump 208. The warm air pump 208 is disposed between the condenser 201 and the second four-way valve 40 and used for driving the cooling fluid to flow on the second preheating loop.

In some embodiments, as illustrated in FIG. 1 and FIG. 2, the armature temperature control loop 20 is connected in parallel with a warm air core 209. The warm air core 209 has an end located between the warm air pump 208 and the second four-way valve 40 and another end located between the condenser 201 and the first four-way valve 30. The warm air core 209 may be heated to generate heat, allowing a cooling fluid passing through the warm air core 209 to be heated.

In some embodiments, as illustrated in FIG. 1 and FIG. 2, the battery temperature control loop 10 is provided with a second pump 103. The second pump 103 is disposed between the power battery 102 and the second four-way valve 40 and used for driving the cooling fluid in the battery temperature control loop 10 to flow.

In some embodiments, the bypass pipeline 203 has an end close to the condenser 201 and another end close to the radiator 202. That is, the bypass pipeline 203 is disposed next to the condenser 201 and the radiator 202. In this way, the route of the short loop formed by the bypass pipeline 203, the condenser 201, and the radiator 202 is shorter, and the flow resistance of the loop is thus smaller.

A vehicle according to an embodiment of the present disclosure includes the thermal management system 100 as described above. The vehicle may refer to a battery electric vehicle or a hybrid electric vehicle. The thermal management system may perform thermal management on the power battery and the motor of the vehicle, to ensure normal operation of the vehicle.

With the vehicle according to the embodiments of the present disclosure, by providing the thermal management system 100, it is possible to reduce flow resistance in a circulation loop, increase a flow rate of the cooling fluid, and satisfy high heat dissipation requirements for the vehicle in the fast charging mode and the super-fast charging mode.

In the description of this specification, descriptions with reference to the terms "some embodiments", "optional", "further", or "some examples", etc. mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure have been shown and described above, it can be understood by those skilled in the art that various changes, modifications, replacements, and variations can be made to these embodiments without departing from the principles and ideas of the present disclosure. The scope of the present disclosure is defined by the claims as attached and their equivalents.

## Claims

1. A thermal management system, comprising:
a battery temperature control loop provided with a chiller heat exchanger; and
an armature temperature control loop provided with a condenser and a radiator, the condenser being able to exchange heat with the chiller heat exchanger, the armature temperature control loop being connected in parallel with a bypass pipeline, the condenser and the radiator being located at one side of the bypass pipeline, and the bypass pipeline being provided with a switch element for opening or closing the bypass pipeline.

2. The thermal management system according to claim 1, wherein the switch element has a first port, a second port, and a third port, each of the first port and the third port being in communication with the armature temperature control loop, and the second port being in communication with the bypass pipeline.

3. The thermal management system according to claim 2, wherein the switch element is a proportional control valve.

4. The thermal management system according to claim 2 or 3, wherein the armature temperature control loop is provided with an armature control member, a drive motor, and a first pump, the switch element being disposed between the drive motor and the first pump, and the first pump and the radiator being located at one side of the bypass pipeline.

5. The thermal management system according to claim 4, further comprising:
a first four-way valve located between the armature control member and the condenser, the first four-way valve having two valve ports in communication with the armature temperature control loop and other two valve ports in communication with the battery temperature control loop; and
a second four-way valve located between the radiator and the condenser, and the second four-way valve having two valve ports in communication with the armature temperature control loop and other two valve ports in communication with the battery temperature control loop,
wherein the battery temperature control loop is provided with a power battery disposed between the first four-way valve and the second four-way valve.

6. The thermal management system according to claim 5, wherein the battery temperature control loop is provided with a second pump disposed between the power battery and the second four-way valve.

7. The thermal management system according to claim 5 or 6, wherein the armature temperature control loop is provided with a warm air pump disposed between the condenser and the second four-way valve.

8. The thermal management system according to claim 7, wherein the armature temperature control loop is connected in parallel with a warm air core, the warm air core having an end located between the warm air pump and the second four-way valve and another end located between the condenser and the first four-way valve.

9. The thermal management system according to any one of claims 1 to 8, wherein the bypass pipeline has an end close to the condenser and another end close to the radiator.

10. A vehicle, comprising the thermal management system according to any one of claims 1 to 9.
